# EUROPEAN PATENT APPLICATION

(11) **EP 4 137 952 A1**
(43) Date of publication of application: **22.02.2023**
(21) Application number: 22185958.0
(22) Date of filing: 20.07.2022
(51) Int. Cl.: G06F 12/02

(54) **LIFECYCLE-AWARE PERSISTENT STORAGE**

(30) Priority: 18.08.2021 US 202163234582 P; 28.10.2021 US 202117513365
(71) Applicant: Samsung Electronics Co., Ltd., Gyeonggi-do, 16677 (KR)
(72) Inventor: PATWARDHAN, Kedar Shrikrishna, San Jose, CA, 95134 (US); RAMAKRISHNAN, Nithya, San Jose, CA, 95134 (US)
(74) Representative: Kuhnen & Wacker Patent- und Rechtsanwaltsbüro PartG mbB

(57) **Abstract**

A system and method for lifecycle-aware persistent key-value storage is provided. In some embodiments, the method includes: receiving a first modification instruction, for a first key; incrementing a device write counter for a persistent storage device; selecting a first block, from the persistent storage device, for the first key, based on a current value of the device write counter; and storing the first key and an associated first value in the first block.

## Description

### FIELD

One or more aspects of embodiments according to the present disclosure relate to key-value storage, and more particularly to a system and method for lifecycle-aware persistent key-value storage.

### BACKGROUND

In a related art persistent storage system (such as a solid-state drive), data may be written to available blocks based on, for example, a fitting algorithm that selects target blocks based on the size of the data to be written, and that may attempt to reduce fragmentation. Such an algorithm may cause data with a short expected life (e.g., data that is likely to be modified - and invalidated in the block - within a relatively short interval of time) to be written into the same block as data with a relatively long expected life. This may result in a relatively large write amplification factor (WAF) because a garbage collection operation may delete and move the long-lived data well before it would have been modified.

Thus, there is a need for an improved system and method for storing data in persistent storage.

### TECHNICAL PROBLEM

Typical data fitting algorithm may cause a mixture of short-life data and long-life data in a block. The mixture may cause a high write amplification factor. The present disclosure will provides a system and a method for allocating data having similar life into the same block.

### SUMMARY

In some embodiments, a key-value (KV) persistent storage system (e.g., a KV solid-state drive (SSD)) stores key-value pairs (KVs) according to estimated key-value life, e.g., according to how long each KV is expected to be stored before it expires, i.e., before an instruction for its modification or deletion is received. Each KV is stored in a block of the SSD along with other KVs having similar estimated key-value lives. As a result, it is expected that the KVs in any block will expire nearly simultaneously, that garbage collection (which will involve relocating unexpired KVs) will involve relocating only a small fraction of the data stored in the block, and that therefore the write amplification factor will be relatively small.

The estimated key-value life of any KV may be based on a device write counter, which is incremented every time a write is performed in the SSD. The value of the device write counter may be recorded in a modification history for each KV, and the estimated key-value life of each KV may be based on the modification history. For example, a KV which historically has been modified at intervals containing relatively few increments of the device write counter may be expected to have a relatively short life, and a KV which historically has been modified at intervals containing relatively many increments of the device write counter may be expected to have a relatively long life.

According to an embodiment of the present disclosure, there is provided a method, including: receiving a first modification instruction, for a first key; incrementing a device write counter for a persistent storage device; selecting a first block, from the persistent storage device, for the first key, based on a current value of the device write counter; and storing the first key and an associated first value in the first block.

In some embodiments, the device write counter is a counter configured to be incremented for each write operation performed in the persistent storage device.

In some embodiments, the method further includes updating a modification history for the first key, the modification history being based on the current value of the device write counter and on a value of the device write counter during a previously executed modification instruction.

In some embodiments, the selecting of the first block includes selecting the first block based on a measure of expected key-value life for the first key.

In some embodiments, the method further includes calculating the measure of expected key-value life, based on the modification history of the first key.

In some embodiments, the method further includes receiving the measure of expected key-value life.

In some embodiments, the method further includes receiving a second modification instruction, for a second key, and selecting a second block based on an estimated key-value life for the second key.

In some embodiments, the first block includes storage cells of a first type, and the second block includes storage cells of a second type, different from the first type.

In some embodiments: the estimated key-value life of the second key is greater than the estimated key-value life of the first key, and the storage cells of the first type have greater longevity than the storage cells of the second type.

In some embodiments, the storage cells of the first type are triple-level cells and the storage cells of the second type are quad-level cells.

According to an embodiment of the present disclosure, there is provided a system, including: a processing circuit; and persistent storage media, the processing circuit being configured to: receive a first modification instruction, for a first key; increment a device write counter for a persistent storage device; select a first block, from the persistent storage device, for the first key, based on a current value of the device write counter; and store the first key and an associated first value in the first block.

In some embodiments, the device write counter is a counter configured to be incremented for each write operation performed in the persistent storage device.

In some embodiments, the processing circuit is further configured to update a modification history for the first key, the modification history being based on the current value of the device write counter and on a value of the device write counter during a previously executed modification instruction.

In some embodiments, the selecting of the first block includes selecting the first block based on a measure of expected key-value life for the first key.

In some embodiments, the processing circuit is further configured to calculate the measure of expected key-value life, based on the modification history of the first key.

In some embodiments, the processing circuit is further configured to receive the measure of expected key-value life.

In some embodiments, the processing circuit is further configured to receive a second modification instruction, for a second key, and to select a second block based on an estimated key-value life for the second key.

In some embodiments, the first block includes storage cells of a first type, and the second block includes storage cells of a second type, different from the first type.

In some embodiments: the estimated key-value life of the second key is greater than the estimated key-value life of the first key, and the storage cells of the first type have greater longevity than the storage cells of the second type.

According to an embodiment of the present disclosure, there is provided a system, including: means for processing; and persistent storage media, the means for processing being configured to: receive a first modification instruction, for a first key; increment a device write counter for a persistent storage device; select a first block, from the persistent storage device, for the first key, based on a current value of the device write counter; and store the first key and an associated first value in the first block.

### ADVANTAGEOUS EFFECT OF THE DISCLOSURE

According to the present disclosure, data are stored in blocks based on their historical life. Thus, data having similar life are stored in the same block such that the write amplification factor is reduced.

### BRIEF DESCRIPTION OF THE DRAWINGS

These and other features and advantages of the present disclosure will be appreciated and understood with reference to the specification, claims, and appended drawings wherein:
FIG. 1 is a data layout diagram, according to an embodiment of the present disclosure;
FIG. 2 is a flowchart of a method for storing or modifying a key-value pair, according to an embodiment of the present disclosure;
FIG. 3A is a flowchart of a method for deleting a key-value pair, according to an embodiment of the present disclosure;
FIG. 3B is a flowchart of a method for performing garbage collection, according to an embodiment of the present disclosure;
FIG. 4 is a block diagram of a host and a storage device, according to an embodiment of the present disclosure; and
FIG. 5 is a flow chart of a method for handling an instruction.

### DETAILED DESCRIPTION

The detailed description set forth below in connection with the appended drawings is intended as a description of exemplary embodiments of a system and method for lifecycle-aware persistent key-value storage provided in accordance with the present disclosure and is not intended to represent the only forms in which the present disclosure may be constructed or utilized. The description sets forth the features of the present disclosure in connection with the illustrated embodiments. It is to be understood, however, that the same or equivalent functions and structures may be accomplished by different embodiments that are also intended to be encompassed within the scope of the disclosure. As denoted elsewhere herein, like element numbers are intended to indicate like elements or features.

Key-value (KV) storage (e.g., solid-state drive (SSD) KV storage) is widely used (e.g., in high-performance computing (HPC)), but it may be restrictive in the way applications can use the media. While KV storage may offload free space management of the media to the device itself, it may not enable applications to be in complete control of data placement policies within the device. One of the issues affecting HPC storage is that different datasets may have different lifetimes, which, as mentioned above, may result in increased write amplification factors. This problem may be exacerbated by the use of high-density NAND media such as Quad-level cell, or "Quad-layer cell" (QLC) NAND which is substantially less expensive but has significantly lower longevity.

In some embodiments, grouping together, in each SSD block, data with similar lifetimes, may significantly reduce the need for device garbage collection (GC) and also reduce WAF, because the erasing (for garbage collection) of a block containing data with similar lifetimes may be postponed until all or nearly all of the data in the block have expired. Also, being able to store datasets into KV stores in a log structured manner with the added flexibility of grouping together datasets having similar lifetimes may be advantageous for applications to achieve the potential of denser SSDs.

Although in some embodiments, an application may be modified to make effective use of denser (low longevity) media, such modifications may be cumbersome, potentially involving explicitly tracking how frequently an object is modified and using the Mean-Time-Between-Modifications (MTBM) as a measure of lifetime of the object. Further, the tracking and collocating of objects having similar lifetimes by an application may consume CPU and memory resources, increasing the Total Cost of Deployment (TCD) of the solution.

Some persistent storage devices such as SSDs may include cells of different types, and having different density or longevity characteristics. For example, a NAND flash cell may be a single-level cell (SLC) (storing one bit per cell), a double-level cell (DLC) (storing two bits per cell), a triple-level cell (TLC) (storing three bits per cell), or a quad-level cell (QLC) (storing four bits per cell). Cells capable of storing more bits generally may have lower longevity, lower cost per bit, and higher density (e.g., as measured in bits per square millimeter) than cells capable of storing fewer bits. As used herein, the "longevity" of a cell is a measure of the number of write / erase cycles that may be performed by a cell before its reliability degrades to an unacceptable level. The loss of reliability with write / erase cycles may be referred to as "wear".

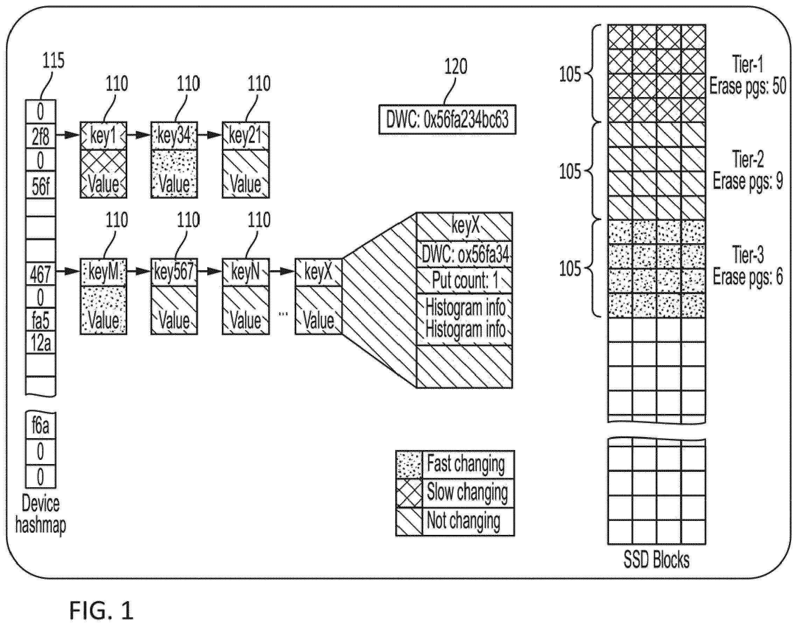

Referring to FIG. 1, in some embodiments, a KV persistent storage system (e.g., a suitably configured and programmed KV SSD) may assign SSD blocks (a "block" being the smallest unit capable of being independently erased) to lifecycle tiers 105. All key-value pairs (KVs) 110 with similar lifecycles (or "estimated key-value lives") may be placed in the same tier, and a device hashmap 115 may contain a list of addresses at which the KVs are stored. For example, a KV persistent storage system may maintain three tiers, (i) an hourly-changing tier (tier 1), (ii) a daily-changing tier (tier 2) and (iii) a weekly-changing tier (tier 3). At any point in time, the KV persistent storage system may assign one block to each of the three tiers. The remainder of the available blocks in the SSD may be kept unassigned to any tier, forming a free pool. As such, each assigned block may store KVs with similar lifecycles. This may help to reduce the write amplification factor, as mentioned above. Moreover, if the persistent storage device includes different types of flash memory cells, then it may be advantageous to assign blocks composed of low-longevity cells to tiers used for storing long-lived KVs, so that the cells in these blocks do not wear too quickly.

When a block is assigned to a lifecycle tier, some of the pages in the block (e.g., one page per stored key) may be reserved, or "kept aside", for the purpose of making copies of keys. These pages may then be used when a key expires. Upon expiration, the key may be copied to a reserved page, with a designated bit set to indicate that it has expired, and the logical-to-physical table of the flash translation layer may be updated so that the logical address corresponding to the key is associated with the new physical location of the key. In this manner, the linked list that stores the hash map corresponding to the key may be kept intact (whereas deleting the key entirely would produce a break in the linked list). In other similar embodiments, instead of reserving pages for copies of expired keys, a separate data structure, for storing the status of each key in the block (i.e., whether or not the key has expired) may be used.

The KV persistent storage system may also maintain a persistent counter which may be referred to as the device write counter (DWC) 120 that is incremented at every modification instruction (e.g., Put instruction) of an object. As used herein, a "modification instruction" is an instruction (such as a Put() of a KV or a Delete of a KV) that writes a KV for the first time, that changes a value associated with a key, or that deletes the KV. When a modification instruction is received for a KV that is already stored, the KV may be said to have "expired". When storing a new object, or "KV" (which may consist of a key and a corresponding value), in the KV persistent storage system for the first time, the KV persistent storage system may store the current device write counter and a Put count (a count of the number of Put instructions received for the key) along with the key. This information (including the value of the device write counter and the Put count), and similar information that may be stored when subsequent modification instructions are received, may be referred to as the "modification history" for the key, or as the "histogram" or "histogram data" or "histogram info" for the key.

For example, when a KV is first written to the KV persistent storage system, the modification history may include the value of the device write counter when the KV was written, and the value 1 for the Put counter. Once the value has been modified multiple times, the modification history may be supplemented with additional information, such as a two-interval rate history, which may include (i) a recent modification rate, which may be an estimate of, e.g., the number of modification instructions received for the key during a first interval beginning 100,000 device write counter counts in the past, and ending at the present, and (ii) an early modification rate, which may be an estimate of (or be proportional to an estimate of) the ratio of (a) the number of modification instructions received for the key during a second interval, beginning at the first Put for the KV and ending 100,000 device write counter counts in the past and (b) the total device write counter counts during the second interval.

As mentioned above, the KV persistent storage system may store each KV in a lifecycle tier based on the estimated key-value life of the KV. As used herein, the "estimated key-value life" of a KV is an estimate of the length of the interval during which the KV is expected to be stored in the KV persistent storage system before an instruction requiring the KV to be modified (e.g., requiring its value to be changed, or requiring the KV to be deleted) is received. The estimated key-value life may be measured in real time (e.g., in minutes, hours, days, or years) or in other units, e.g., in increments of the device write counter. The estimated key-value life may be based on one or more measures of expected key-value life, such as the early modification rate and the recent modification rate described above. As used herein, a "measure of expected key life" is any function that provides an indication of the estimated key-value life (e.g., a measure of expected key life may be (i) a mean time between modifications (which may be approximately proportional to the estimated key-value life) or it may be (ii) a modification rate (which may be approximately inversely proportional to the estimated key-value life)).

If a KV has a sufficient modification history, the KV persistent storage system may calculate the measure of expected key-value life of the KV based on the modification history. The KV persistent storage system may then select a tier based on a set of thresholds. For example, if the KV persistent storage system has maintained a two-interval rate history, then tier 1 may be selected for any KV having a recent modification rate greater than a first threshold, tier 2 may be selected for any KV having a recent modification rate less than the first threshold and greater than a second threshold, and tier 3 may be selected for any KV having a recent modification rate less than the second threshold (where the second threshold is less than the first threshold). In some embodiments a different function of the modification history may be used; for example, a weighted modification rate, equal to 1/3 of the early modification rate plus 2/3 of the recent modification rate may be compared to the thresholds, instead of the recent modification rate. The use of a measure of expected key-value life that is based on the device write counter (instead of being based, e.g., on real time) may have the benefit that in circumstances in which real time is not relevant, the system continues to operate properly. For example, if an SSD is shut down, taken out of service, or otherwise inactive for a period of time, then if the measure of expected key-value life were based on real time, the period of inactivity would cause the KVs stored to appear, incorrectly, to have longer lifetimes. The use of the device write counter instead of real time may avoid this problem.

In some embodiments, the KV persistent storage system may lack sufficient modification history for a KV when it is first written to calculate a meaningful measure of expected key-value life. In such a situation, the KV may be written to a tier selected as the "initial storage tier", and left in that tier until (i) further modification instructions have been received for the KV (e.g., until at least two more modification instructions have been received for the KV), or until (ii) enough device write counter increments have occurred, without a modification instruction having been received for the KV, to conclude that the KV has an estimated key-value life sufficiently great to merit inclusion in the longest-lifecycle tier. Once enough further modification instructions have been received for the KV to calculate a meaningful measure of expected key-value life, the KV may be moved to the tier corresponding to the measure of expected key-value life. The initial storage tier may be one composed of the highest-longevity cells (e.g., SLC cells) (so that if the KV turns out to be a short-lived KV, the resulting wear on the cells may nonetheless be acceptable), or, e.g., in an SSD with an abundance of low-longevity cells (e.g., QLC cells), the initial storage tier may be one composed of such low-longevity cells.

In some embodiments, an application (e.g., an application running on a host using the KV persistent storage system) may send, to the KV persistent storage system, along with an instruction to write or modify a KV, a measure of expected key-value life. In such an embodiment, the KV persistent storage system may, when it receives an instruction to write a new KV, immediately store the new KV in the appropriate tier, without waiting to accumulate a significant modification history for the KV. For a KV for which a significant modification history has already been accumulated (e.g., for which at least a threshold number of modification instructions have been received, the threshold number being between 2 and 100), the KV persistent storage system may use the measure of expected key-value life (received from the application) together with, or instead of, a measure of expected key-value life derived from the modification history.

When a KV stored in the KV persistent storage system is updated, the previously stored modification history is read along with the key, and modified to account for the new modification instruction. For example, if the modification history includes a two-interval rate history, then the early modification rate may be updated based on the change in the boundary between the first interval and the second interval, and the recent modification rate may be updated based on (i) the change in the boundary between the first interval and the second interval and (ii) the newly received modification instruction.

As another example, the difference between the device write counter value at the time the KV was previously stored and the current device write counter value may be taken as a measure of the instantaneous lifecycle of the KV. The instantaneous lifecycle of the KV may be merged with historical information on previous modifications of the KV to derive an average lifecycle of the KV. Based on the average lifecycle of the KV so deduced, the updated KV may be allocated to pages from a lifecycle tier that most closely matches the estimated key-value life of the KV. If the lifecycle tier already has an SSD block allocated to it and has free space, pages from that block may be used. If the lifecycle tier has no block allocated to it, a new SSD block may be dedicated for the said tier and may be used for all page allocations for that tier, until it is full.

As mentioned above, in some embodiments, the KV persistent storage system may have the ability to deduce KV lifetimes and optimize storing of KVs to pages of a block that contain objects with similar lifetimes. Further, the allocations themselves may follow a log-structured pattern in the sense that the block may be filled in the order in which new instructions are received.

In some embodiments, the KV persistent storage system is contained entirely within an SSD. In other embodiments, part of the KV persistent storage system may be implemented outside of an SSD. For example, in a Redundant Array of Independent Disks (RAID) system including a RAID controller and a plurality of SSDs, the RAID controller may implement the key-value layer, and the SSDs may be block SSDs. In another embodiment, one or more block SSDs is connected to a host, which implements the key-value layer. In either of these embodiments, the key-value layer may implement the device write counter and the tiered storage of KVs according to their estimated key-value lives, according to methods disclosed herein.

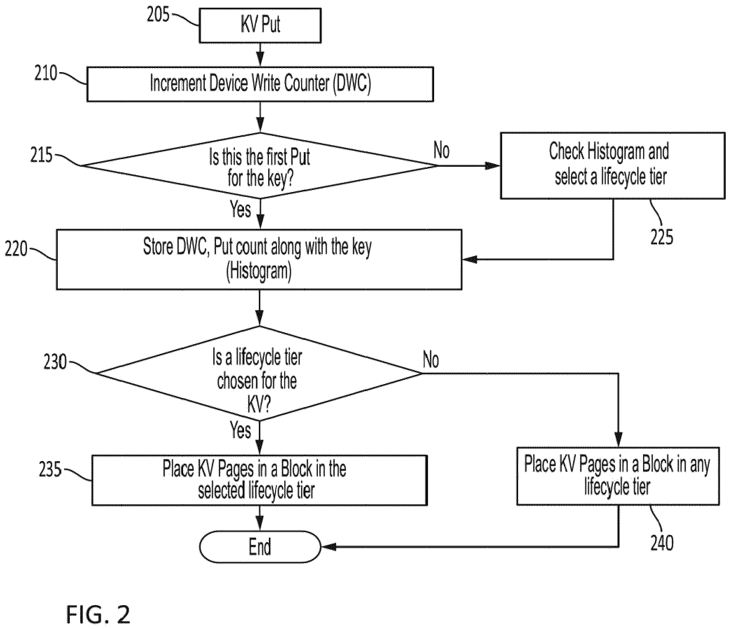

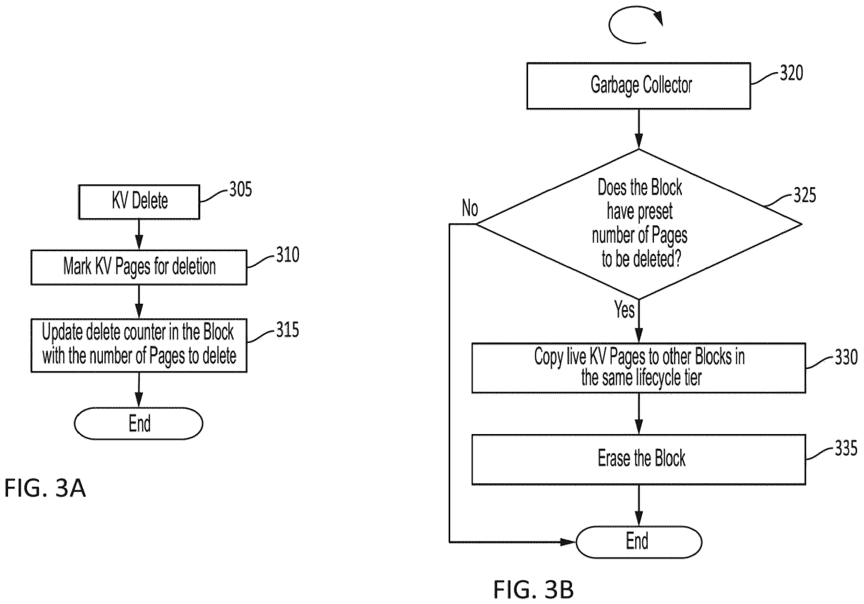

Some aspects of methods disclosed herein are illustrated in FIGs. 2, 3A, and 3B. In FIG. 2, a Put instruction is received at 205, and the device write counter (DWC) is incremented at 210. If, as determined at 215, the present Put is the first Put for the key, then, at 220, the device write counter and the Put count (in this case, 1) are stored along with the key. If, as determined at 215, the present Put is not the first Put for the key, then, at 225, a lifecycle tier is selected based on the modification history, and the process proceeds to step 220. After the completion of step 220, If, as determined at 230, a lifecycle tier has been chosen for the KV (e.g., either as a result of a selection made, based on the measure of expected key-value life estimated by the KV persistent storage system, or as a result of an indication received (e.g., from an application) by the KV persistent storage system), then, at 235, the KV pages (e.g., the key, and the histogram information, and the value) are stored in the selected lifecycle tier; otherwise, they are saved in any lifecycle tier (e.g., in a preselected tier being used for temporary storage of KVs while a measure of expected key-value life is being estimated).

In some embodiments, when processing KV deletes, the pages that contain the deleted KV are not immediately queued for deletes. Instead, a counter per block is updated to reflect the number of pages to be erased in that block. When a threshold number of pages in a block (which may have similar lifetimes) have been marked for erase, the entire block is erased and any KVs still alive are copied to a new block allocated to the same tier as the source block. This process is illustrated in FIGs. 3A and 3B. Referring to FIG. 3A, when a Delete instruction is received, at 305, the KV pages affected are marked for deletion at 310, and the delete counter, in the affected block, is updated with the number of pages to be deleted. Garbage collection may then proceed as illustrated in FIG. 3B, beginning at 320. If, as determined at 325, the block has accumulated a threshold number of pages to be deleted (where the threshold number of pages may be, e.g., 90% of the pages, or a fraction between 70% and 95% of the pages), then, at 330, the remaining live KV pages in the block are copied to other blocks in the same lifecycle tier, and the block is erased, at 335. If, as determined at 325, the block has not accumulated a threshold number of pages to be deleted, then no action is taken. In some embodiments, because the pages are expected to have similar lifetimes, the threshold number of pages (the reaching of which triggers garbage collection) may be a relatively high proportion of the pages in the block, without reducing the capacity of the SSD to an unacceptable extent. In some embodiments, the write amplification factor may be, e.g., less than 5 (or between 1.1 and 10.0).

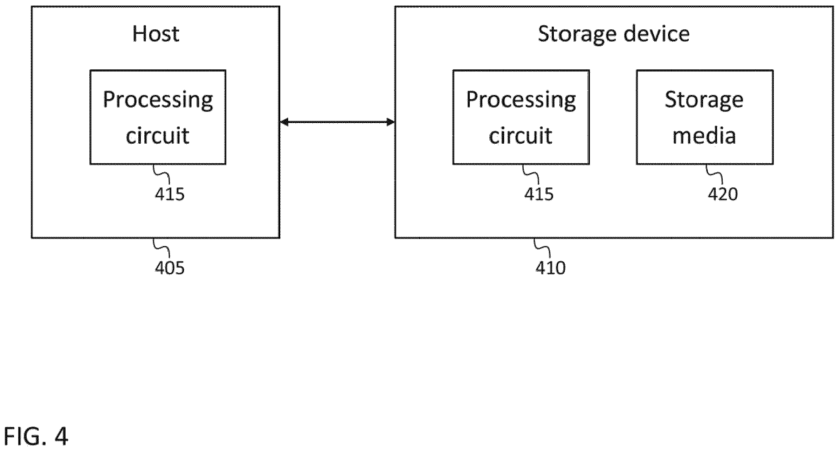

FIG. 4 is a block diagram of a host 405 and a storage device 410 (which may be a KV storage device, e.g., a KV SSD). The storage device 410 may have a form factor that is any one of a plurality of form factors suitable for persistent storage devices, including but not limited to 2.5", 1.8", MO-297, MO-300, M.2, and Enterprise and Data Center SSD Form Factor (EDSFF), and it may have an electrical interface, through which it may be connected to the host 405, that is any one of a plurality of interfaces suitable for persistent storage devices, including Peripheral Component Interconnect (PCI), PCI express (PCIe), Ethernet, Small Computer System Interface (SCSI), Serial AT Attachment (SATA), and Serial Attached SCSI (SAS). Each of the host 405 and the storage device 410 may include a processing circuit 415 (discussed in further detail below). The storage device 410 may also include persistent storage media 420 (e.g., NAND flash). The processing circuit 415 of the storage device 410 may perform (and, using the processing circuit 415 that it contains, the storage device 410 may perform) some or all of the methods described herein.

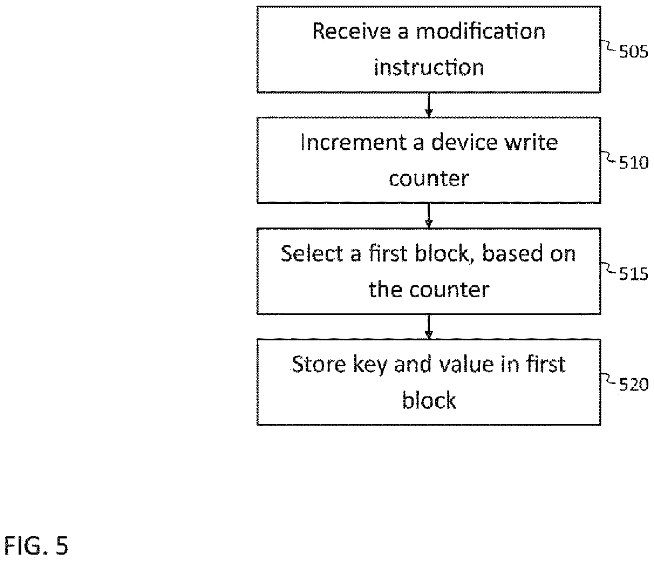

The flowchart of FIG. 5 shows an example of a method, including receiving, at 505, a first modification instruction, for a first key; incrementing, at 510, a device write counter for a persistent storage device; selecting, at 515, a first block, from among a plurality of blocks of the storage device, for the first key, based on a current value of the device write counter; and storing, at 520, the first key and an associated first value, in the first block.

As used herein, "a portion of" something means "at least some of" the thing, and as such may mean less than all of, or all of, the thing. As such, "a portion of" a thing includes the entire thing as a special case, i.e., the entire thing is an example of a portion of the thing. As used herein, when a second quantity is "within Y" of a first quantity X, it means that the second quantity is at least X-Y and the second quantity is at most X+Y. As used herein, when a second number is "within Y%" of a first number, it means that the second number is at least (1-Y/100) times the first number and the second number is at most (1+Y/100) times the first number. As used herein, the term "or" should be interpreted as "and/or", such that, for example, "A or B" means any one of "A" or "B" or "A and B". As used herein, the term "array" refers to an ordered set of numbers regardless of how stored (e.g., whether stored in consecutive memory locations, or in a linked list).

The background provided in the Background section of the present disclosure section is included only to set context, and the content of the Background section is not admitted to be prior art. Any of the components or any combination of the components described (e.g., in any system diagrams included herein) may be used to perform one or more of the operations of any flow chart included herein. Further, (i) the operations are example operations, and may involve various additional steps not explicitly covered, and (ii) the temporal order of the operations may be varied.

Each of the terms "processing circuit" and "means for processing" is used herein to mean any combination of hardware, firmware, and software, employed to process data or digital signals. Processing circuit hardware may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processing circuit, as used herein, each function is performed either by hardware configured, i.e., hard-wired, to perform that function, or by more general-purpose hardware, such as a CPU, configured to execute instructions stored in a non-transitory storage medium. A processing circuit may be fabricated on a single printed circuit board (PCB) or distributed over several interconnected PCBs. A processing circuit may contain other processing circuits; for example, a processing circuit may include two processing circuits, an FPGA and a CPU, interconnected on a PCB.

As used herein, when a method (e.g., an adjustment) or a first quantity (e.g., a first variable) is referred to as being "based on" a second quantity (e.g., a second variable) it means that the second quantity is an input to the method or influences the first quantity, e.g., the second quantity may be an input (e.g., the only input, or one of several inputs) to a function that calculates the first quantity, or the first quantity may be equal to the second quantity, or the first quantity may be the same as (e.g., stored at the same location or locations in memory as) the second quantity.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section, without departing from the scope of the inventive concept.

The terminology used herein is for the purpose of describing particular embodiments only and is not intended to be limiting of the inventive concept. As used herein, the terms "substantially," "about," and similar terms are used as terms of approximation and not as terms of degree, and are intended to account for the inherent deviations in measured or calculated values that would be recognized by those of ordinary skill in the art.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". Also, the term "exemplary" is intended to refer to an example or illustration. As used herein, the terms "use," "using," and "used" may be considered synonymous with the terms "utilize," "utilizing," and "utilized," respectively.

It will be understood that when an element or layer is referred to as being "on", "connected to", "coupled to", or "adjacent to" another element or layer, it may be directly on, connected to, coupled to, or adjacent to the other element or layer, or one or more intervening elements or layers may be present. In contrast, when an element or layer is referred to as being "directly on", "directly connected to", "directly coupled to", or "immediately adjacent to" another element or layer, there are no intervening elements or layers present.

Any numerical range recited herein is intended to include all sub-ranges of the same numerical precision subsumed within the recited range. For example, a range of "1.0 to 10.0" or "between 1.0 and 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Similarly, a range described as "within 35% of 10" is intended to include all subranges between (and including) the recited minimum value of 6.5 (i.e., (1 - 35/100) times 10) and the recited maximum value of 13.5 (i.e., (1 + 35/100) times 10), that is, having a minimum value equal to or greater than 6.5 and a maximum value equal to or less than 13.5, such as, for example, 7.4 to 10.6. Any maximum numerical limitation recited herein is intended to include all lower numerical limitations subsumed therein and any minimum numerical limitation recited in this specification is intended to include all higher numerical limitations subsumed therein.

Although exemplary embodiments of a system and method for lifecycle-aware persistent key-value storage have been specifically described and illustrated herein, many modifications and variations will be apparent to those skilled in the art. Accordingly, it is to be understood that a system and method for lifecycle-aware persistent key-value storage constructed according to principles of this disclosure may be embodied other than as specifically described herein. The invention is also defined in the following claims.

## Claims

1. A method, comprising:
receiving a first modification instruction, for a first key;
incrementing a device write counter for a persistent storage device;
selecting a first block, from the persistent storage device, for the first key, based on a current value of the device write counter; and
storing the first key and an associated first value in the first block.

2. The method of claim 1, wherein the device write counter is a counter configured to be incremented for each write operation performed in the persistent storage device.

3. The method of claim 1 or 2, further comprising updating a modification history for the first key, the modification history being based on the current value of the device write counter and on a value of the device write counter during a previously executed modification instruction.

4. The method of claim 3, wherein the selecting of the first block comprises selecting the first block based on a measure of expected key-value life for the first key.

5. The method of claim 4, further comprising calculating the measure of expected key-value life, based on the modification history of the first key.

6. The method of claim 4, further comprising receiving the measure of expected key-value life.

7. The method of any one of claims 1 to 6, further comprising receiving a second modification instruction, for a second key, and selecting a second block based on an estimated key-value life for the second key.

8. The method of claim 7, wherein the first block comprises storage cells of a first type, and the second block comprises storage cells of a second type, different from the first type.

9. The method of claim 8, wherein:
the estimated key-value life of the second key is greater than the estimated key-value life of the first key, and
the storage cells of the first type have greater longevity than the storage cells of the second type.

10. The method of claim 9, wherein the storage cells of the first type are triple-level cells and the storage cells of the second type are quad-level cells.

11. A system, comprising:
a processing circuit; and
persistent storage media,
the processing circuit being configured to perform the method of any one of claims 1 to 10.
